(19) **Europäisches Patentamt European Patent Office Office européen des brevets**

(11) **EP 4 557 510 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
*H01Q 1/24* (2006.01)    *H01Q 1/22* (2006.01)
*H01Q 1/36* (2006.01)

(21) Application number: 23917229.9

(22) Date of filing: **30.11.2023**

(86) International application number:
**PCT/CN2023/135497**

(87) International publication number:
**WO 2024/152761 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 CN 202310125196**

(71) Applicant: **Huawei Technologies Co., Ltd.**
**Shenzhen, Guangdong 518129 (CN)**

(72) Inventors:
• **WANG, Jikang**
  **Shenzhen, Guangdong 518129 (CN)**
• **YU, Dong**
  **Shenzhen, Guangdong 518129 (CN)**
• **XIE, Zhiyuan**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **FOLDABLE ELECTRONIC DEVICE**

(57)    Embodiments of this application provide a foldable electronic device, including a first housing and a second housing that are foldable, where a part of a frame of the first housing and a part of a frame of the second housing respectively serve as a first radiator and a second radiator of an antenna. When the foldable electronic device is in a folded state, the first radiator is coupled to the second radiator, so that the second radiator serves as a parasitic stub of the first radiator and operates together with the first radiator. A length of the second radiator is set to be greater than a length of the first radiator, so that a radiation capability of the second radiator is further improved, to improve a radiation capability of energy transferred by the first radiator to the second radiator through coupling, so as to improve radiation efficiency of the first radiator. The technical solutions of this application can improve antenna performance of the foldable electronic device in a folded state, so that the foldable electronic device has a good radiation characteristic.

FIG. 3

# Description

This application claims priority to Chinese Patent Application No. 202310125196.6, filed with the China National Intellectual Property Administration on January 20, 2023, and entitled "FOLDABLE ELECTRONIC DEVICE", which is incorporated herein by reference in its entirety.

## TECHNICAL FIELD

Embodiments of this application relate to the field of electronic devices, and more specifically, to a foldable electronic device.

## BACKGROUND

A foldable electronic device may switch between a folded state and an unfolded state. When the foldable electronic device is in a folded state, space occupied by the foldable electronic device is small. When the foldable electronic device is in an unfolded state, the foldable electronic device may display a large screen, to increase a view range available for a user. The foldable electronic device has become a general development orientation of current technologies.

However, when the foldable electronic device is in a folded state, antenna performance in a conventional antenna architecture is significantly degraded compared with that in an unfolded state, and antenna performance is poor. Therefore, how to improve the antenna performance of the foldable electronic device in a folded state is a problem that needs to be urgently resolved.

## SUMMARY

Embodiments of this application provide a foldable electronic device, to improve antenna performance of the foldable electronic device in a folded state.

According to a first aspect, a foldable electronic device is provided, including: a first housing and a second housing, where the first housing includes a first side frame, and the second housing includes a second side frame; a hinge, where the hinge is located between the first housing and the second housing, and the hinge is rotatably connected to the first housing and the second housing separately; and an antenna, where the antenna includes a first radiator and a second radiator, the first radiator includes a part of the first side frame, and the second radiator includes a part of the second side frame, where a feed point is disposed on the first radiator, and is configured to feed the antenna, and a length of the second radiator is greater than a length of the first radiator; and when the foldable electronic device is in a folded state, in a thickness direction of the foldable device, the first radiator and the second radiator are disposed opposite to each other at a first spacing, and at least a part of the first radiator overlaps the second radiator, so that the first radiator is coupled to the second radiator.

In the foregoing technical solution, when the first radiator operates, radio frequency energy of the first radiator can be transferred to the second radiator through coupling, to excite the second radiator to generate radiation, so that the second radiator serves as the parasitic stub and operates together with the first radiator. In addition, the length of the second radiator is set to be greater than the length of the first radiator. This helps further improve a radiation capability of the second radiator, to improve a radiation capability of the radio frequency energy transferred by the first radiator to the second radiator through coupling. In this way, radiation efficiency of the first radiator can be improved, and an operating bandwidth of the antenna can be extended. This helps reduce adverse impact on antenna performance caused by a reduced ground plane size or overlapping coverage of the housings in a folded state, to improve the antenna performance of the foldable electronic device in a folded state, so that the foldable electronic device has a good radiation characteristic.

With reference to the first aspect, in some implementations of the first aspect, the length L1 of the first radiator and the length L2 of the second radiator satisfy: L2≥1.5L1. In this way, it can be ensured that the radiation efficiency of the first radiator is improved by increasing the length of the second radiator. For example, in comparison with a case in which L2≤L1, when L2>1.5L1, the radiation efficiency of the first radiator may be improved by about 1 dB.

With reference to the first aspect, in some implementations of the first aspect, the first radiator includes a first end and a second end, the first end is grounded, and the feed point is at a location that is on the first radiator and that is close to the second end; and the second radiator includes a third end and a fourth end, and the third end is grounded.

In the foregoing technical solution, because the second radiator serving as the parasitic stub is grounded, when the foldable electronic device is in a folded state, the first radiator is coupled to the second radiator, so that the second radiator can better use a ground plane current to generate radiation together. In this case, an electrical length of the second radiator may be a quarter of an operating wavelength of the second radiator, that is, the second radiator is a quarter-wave antenna.

With reference to the first aspect, in some implementations of the first aspect, the foldable electronic device further includes a switching circuit, a connection point is disposed on the second radiator, and the connection point is at a location that is on the second radiator and that is close to the fourth end; and one end of the switching circuit is grounded, and another end of the switching circuit is connected to the connection point, to adjust a resonance frequency of the second radiator.

In the foregoing technical solution, the switching circuit is disposed, so that the resonance frequency of the second radiator serving as the parasitic stub can be adjusted. In this way, the antenna can cover different frequency bands. This helps meet a communication requirement.

With reference to the first aspect, in some implementations of the first aspect, a distance D1 between the connection point and the fourth end satisfies: $1/3L2 \leq D1 \leq 1/2L2$, where L2 is the length of the second radiator, so that a coupling requirement of the first radiator and the second radiator can be better met.

With reference to the first aspect, in some implementations of the first aspect, the switching circuit includes a switch component and a plurality of matching branches in parallel with the device, one end of the switch component is grounded, another end of the switch component is connected to the plurality of matching branches, and other ends of the plurality of matching branches are connected to the connection point; and the switch component switches between the plurality of matching branches, to adjust the resonance frequency of the second radiator.

With reference to the first aspect, in some implementations of the first aspect, the first side frame has a first location and a second location, and the second side frame has a third location and a fourth location; the first radiator includes the first side frame between the first location and the second location; and the second radiator includes the second side frame between the third location and the fourth location.

With reference to the first aspect, in some implementations of the first aspect, the first side frame includes a first side and a second side that intersect at an angle, and the first side is parallel to an extension direction of the hinge; and the first location and the second location are on the first side; or the first location and the second location are on the second side.

It may be understood that, a location of the first radiator in the foldable electronic device may be flexibly adjusted according to an actual production and design requirement. For example, the first radiator may be located on a long side or a wide side of the foldable electronic device.

With reference to the first aspect, in some implementations of the first aspect, the second side frame includes a third side and a fourth side that intersect at an angle, and the third side is parallel to the extension direction of the hinge; and the third location and the fourth location are on the third side; the third location and the fourth location are on the fourth side; or the third location is on the third side, and the fourth location is on the fourth side.

It may be understood that, based on the location of the first radiator in the foldable electronic device, a location of the second radiator in the foldable electronic device may be flexibly adjusted according to an actual production and design requirement. For example, the second radiator may be located on a long side, a wide side, or both a long side and a wide side of the foldable electronic device.

With reference to the first aspect, in some implementations of the first aspect, the first location is in an overlapping area of the first side and the second side, and the third location is in an overlapping area of the third side and the fourth side.

It may be understood that one end of the first radiator and one end of the second radiator may alternatively be located at a corner of the foldable electronic device.

With reference to the first aspect, in some implementations of the first aspect, when the foldable setting is in a folded state, a length L3 of an overlapping portion of the first radiator and the second radiator satisfies: $L3 > 1/2L1$, where L1 is the length of the first radiator. This helps ensure coupling strength between the first radiator and the second radiator.

**BRIEF DESCRIPTION OF DRAWINGS**

FIG. 1 is a diagram of a structure of a foldable electronic device 100 according to an embodiment of this application;

FIG. 2 is a diagram of a structure of a foldable electronic device 100 in an out-folded state;

FIG. 3 is a diagram of a structure of a foldable electronic device in an unfolded state according to an embodiment of this application;

FIG. 4 is a diagram of a structure of a foldable electronic device in a folded state according to an embodiment of this application;

FIG. 5 is a diagram of a structure of a foldable electronic device in a folded state;

FIG. 6 is another diagram of a structure of a foldable electronic device in a folded state;

FIG. 7 is a scalar distribution diagram of a local magnetic field of an antenna in a case in which the foldable electronic device shown in FIG. 4 is in a folded state;

FIG. 8 is a vector distribution diagram of a local magnetic field of an antenna in a case in which the foldable electronic device shown in FIG. 4 is in a folded state;

FIG. 9 is a diagram of simulation results of total efficiency and radiation efficiency of an antenna in cases in which the foldable electronic devices shown in FIG. 4 and FIG. 5 are in a folded state;

FIG. 10 is a diagram of structures of a current distribution at a location of a second radiator 242 in cases in which the foldable electronic devices shown in FIG. 4 and FIG. 6 are in a folded state;

FIG. 11 is a diagram of simulation results of total efficiency and radiation efficiency of an antenna in cases in which the foldable electronic devices shown in FIG. 4 and FIG. 6 are in a folded state;

FIG. 12 is another diagram of a structure of a foldable electronic device in a folded state according to an embodiment of this application;

FIG. 13 is a diagram of a structure of a foldable electronic device in a folded state according to an embodiment of this application;

FIG. 14 is a diagram of simulation results of total efficiency and radiation efficiency of an antenna in cases in which the foldable electronic devices shown in FIG. 13 and FIG. 5 are in a folded state;

FIG. 15 is another diagram of a structure of a foldable electronic device in a folded state according to an embodiment of this application;

FIG. 16 is a diagram of simulation results of total efficiency and radiation efficiency of an antenna in cases in which the foldable electronic devices shown in FIG. 15 and FIG. 5 are in a folded state;

FIG. 17 is another diagram of a structure of a foldable electronic device in a folded state according to an embodiment of this application;

FIG. 18 is a diagram of simulation results of total efficiency and radiation efficiency of an antenna in cases in which the foldable electronic devices shown in FIG. 17 and FIG. 5 are in a folded state;

FIG. 19 is a diagram of simulation results of an S parameter of an antenna in cases in which the foldable electronic devices shown in FIG. 17 and FIG. 5 are in a folded state;

FIG. 20 is another diagram of a structure of a foldable electronic device in a folded state according to an embodiment of this application;

FIG. 21 is another diagram of a structure of a foldable electronic device in a folded state according to an embodiment of this application; and

FIG. 22 is another diagram of a structure of a foldable electronic device in a folded state according to an embodiment of this application.

## DESCRIPTION OF EMBODIMENTS

The following describes technical solutions of embodiments in this application with reference to accompanying drawings.

For ease of understanding, the following explains and describes related technical terms in embodiments of this application.

Coupling may be understood as direct coupling and/or indirect coupling, and a "coupling connection" may be understood as a direct coupling connection and/or an indirect coupling connection. The direct coupling may also be referred to as an "electrical connection", and may be understood as physical contact and electrical conduction of components, or may be understood as a form in which different components in a line structure are connected through a physical line that can transmit an electrical signal, for example, a copper foil or a conductive wire of a printed circuit board (printed circuit board, PCB). The "indirect coupling" may be understood as electrical conduction of two conductors through air or without contact. In an embodiment, the indirect coupling may also be referred to as capacitive coupling. For example, signal transmission is implemented by forming an equivalent capacitor through coupling in a spacing formed by spacing two conductive members.

Connection/Connected: The connection indicates a mechanical connection relationship or a physical connection relationship. For example, connection between A and B or A is connected to B may mean that there is a fastened component (such as a bolt or a rivet) between A and B, or mean that A and B are in contact with each other and A and B are difficult to be separated.

Resonance/resonant frequency: The resonant frequency is also referred to as a resonant vibration frequency. The resonance frequency may be a frequency at which an imaginary part of an antenna input impedance is zero. The resonant frequency may have a frequency range, namely, a frequency range in which resonant vibration occurs. A frequency corresponding to a strongest resonant vibration point is a center frequency. A return loss of the center frequency may be less than -20 dB.

Resonance frequency band/Communication frequency band/Operating frequency band: Regardless of a type of an antenna, the antenna operates in a specific frequency range (bandwidth). For example, an operating frequency band of an antenna supporting a B40 frequency band includes a frequency ranging from 2300 MHz to 2400 MHz. In other words, the operating frequency band of the antenna includes the B40 frequency band. A frequency range that satisfies a requirement of an indicator may be considered as the operating frequency band of the antenna.

Limitations such as symmetry (for example, axisymmetricity or centrosymmetry), parallelism, perpendicularity, and sameness (for example, length sameness and width sameness) mentioned in embodiments of this application are all for a current technology level, but are not absolutely strict definitions in a mathematical sense. There may be a predetermined angle deviation between two parallel or vertical to each other. In an embodiment, a predetermined threshold may be less than or equal to a threshold of 1 mm. For example, the predetermined threshold may be 0.5 mm, or may be 0.1 mm. In an embodiment, a predetermined angle may be an angle within a range of $\pm 10°$. For example, the predetermined angle deviation may be $\pm 5°$.

Antenna pattern: The antenna pattern is also referred to as a radiation pattern. The antenna pattern is a pattern in which relative field strength (a normalized modulus value) of an antenna radiation field changes with a direction at a specific distance from the antenna. The antenna pattern is usually indicated by two plane patterns that are perpendicular to each other in a maximum radiation direction of an antenna.

The antenna pattern usually includes a plurality of radiation beams. A radiation beam with highest radiation strength is referred to as a main lobe, and another radiation beam is referred to as a minor lobe or side lobe. In minor lobes, a minor lobe in an opposite direction of the main lobe is also referred to as a back lobe.

Total efficiency (total efficiency) of an antenna is a ratio of input power to output power at a port of the antenna.

Radiation efficiency (radiation efficiency) of an antenna is a ratio of power radiated by the antenna to space (namely, power for effectively converting an electromagnetic wave) to active power input to the antenna. Active power input to the antenna=input power of the antenna-loss power. The loss power mainly includes return loss power, metal ohmic loss power, and/or dielectric loss power. The radiation efficiency is a value for measuring a radiation capability of the antenna. A metal loss and a dielectric loss are factors that affect the radiation efficiency.

It should be understood that the efficiency is generally indicated by a percentage, and there is a corresponding conversion relationship between efficiency and dB. Efficiency closer to 0 dB indicates better efficiency of the antenna.

Antenna return loss: The antenna return loss may be understood as a ratio of power of a signal reflected back to an antenna port via an antenna circuit to transmit power of the antenna port. A weaker reflected signal indicates a stronger signal radiated by the antenna to space and higher radiation efficiency of the antenna. A stronger reflected signal indicates a weaker signal radiated by the antenna to space and lower radiation efficiency of the antenna.

The antenna return loss may be indicated by an S11 parameter, and S11 is one of S parameters. S11 indicates a reflection coefficient, and the parameter can indicate transmit efficiency of the antenna. The S11 parameter is usually a negative number. A smaller S11 parameter indicates a smaller antenna return loss, less energy reflected back by the antenna, namely, more energy that actually enters the antenna, and higher total efficiency of the antenna. A larger S11 parameter indicates a larger antenna return loss and lower total efficiency of the antenna.

It should be noted that, in engineering, a value of S11 is generally -6 dB as a standard. When the value of S11 of the antenna is less than -6 dB, it may be considered that the antenna can operate normally, or it may be considered that transmit efficiency of the antenna is good.

Ground, or ground plane: The ground may generally mean at least a part of any grounding plane, grounding plate, ground metal layer, or the like in an electronic device (like a mobile phone), or at least a part of any combination of the foregoing grounding plane, grounding plate, ground component, or the like. The "ground" may be used to ground components in the electronic device. In an embodiment, the "ground" may be a grounding plane of a circuit board of the electronic device, or may be a grounding plate formed including a middle frame of the electronic device or a ground metal layer including a metal thin film at a lower part of a screen. In an embodiment, the circuit board may be a printed circuit board (printed circuit board, PCB), for example, an 8-layer board, a 10-layer board, a 12-layer board, a 13-layer board, or a 14-layer board having 8, 10, 12, 13, or 14 layers of conductive materials respectively, or an element that is isolated and electrically insulated by using a dielectric layer or an insulation layer like a glass fiber or a polymer.

The any grounding plane, or grounding plate, or ground metal layer is made of a conductive material. In an embodiment, the conductive material may be, for example, any one of the following materials: copper, aluminum, stainless steel, brass, an alloy thereof, copper foil on an insulation substrate, aluminum foil on the insulation substrate, gold foil on the insulation laminate, silver-plated copper, silver-plated copper foil on the insulation substrate, silver foil on the insulation substrate, tin-plated copper, cloth impregnated with graphite powder, a graphite-coated substrate, a copper-plated substrate, a brass-plated substrate, and an aluminum-plated substrate. A person skilled in the art may understand that the grounding plane/grounding plate/ground metal layer may alternatively be made of another conductive material.

The technical solutions provided in embodiments of this application are applicable to a foldable electronic device that uses one or more of the following communication technologies: a Bluetooth (Bluetooth, BT) communication technology, a global positioning system (global positioning system, GPS) communication technology, a wireless fidelity (wireless fidelity, Wi-Fi) communication technology, a global system for mobile communications (global system for mobile communications, GSM) communication technology, a wideband code division multiple access (wideband code division multiple access, WCDMA) communication technology, a long term evolution (long term evolution, LTE) communication technology, a 5G communication technology, and other future communication technologies. In the following embodiments, a requirement of a communication network is not highlighted, and an operating characteristic of an antenna is described only in frequency bands of different values.

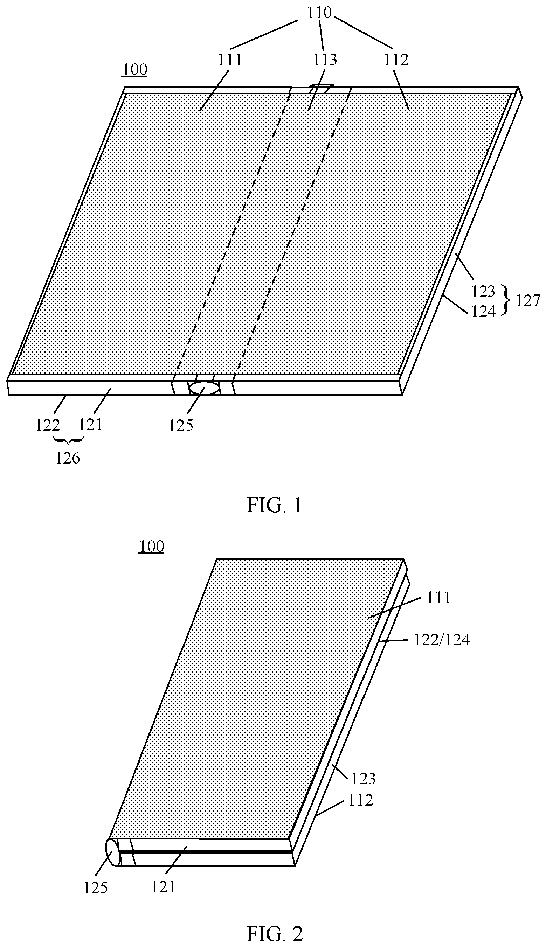

FIG. 1 is a diagram of a structure of a foldable electronic device 100 according to an embodiment of this application. The foldable electronic device 100 may be an electronic device having a foldable function, for example, a mobile phone, a tablet computer, a watch, an e-reader, a notebook computer, or a wearable device. The embodiment shown in FIG. 1 is described by using a foldable mobile phone as an example.

As shown in FIG. 1, the foldable electronic device 100 may include a flexible display 110, a first side frame 121, a first cover body 122, a second side frame 123, a second cover body 124, and a hinge 125. In some embodiments, the first side frame 121, the first cover body 122, the second side frame 123, and the second cover body 124 may form a first housing 126 and a second housing 127 that support the flexible display 110. In some other embodiments, at least one of the first cover body 122 and the second cover body 124 may be a display.

A dot matrix pattern filled in FIG. 1 schematically indicates the flexible display 110. The flexible display 110 may be strongly flexile and bendable, to provide a user with a new interaction manner based on a bendable property. A display panel of the flexible display 110 may be, for example, any one of a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), or quantum dot light emitting diode (quantum dot light emitting diode, QLED). This is not limited.

The flexible display 110 may include a first display portion 111 corresponding to the first housing 126, a second display portion 112 corresponding to the second housing 127, and a foldable display portion 113 corresponding to the hinge 125. The foldable display portion 113 is connected between the first display portion 111 and the second display portion 112.

The first side frame 121 may surround a periphery of the first cover body 122, and at least a part of the first side frame 121 may further surround a periphery of the first display portion 111. The first display portion 111 and the first cover body 122 may be located on two sides of the first side frame 120, and the first display portion 111 and the first cover body 122 may be disposed in parallel and spaced from each other. A spacing between the first display portion 111 and the first cover body 122 may be used to dispose a component of the foldable electronic device 100, for example, an antenna or a circuit board component.

The second side frame 123 may surround a periphery of the second cover body 124, and at least a part of the second side frame 123 may further surround a periphery of the second display portion 112. The second display portion 112 and the second cover body 124 may be located on two sides of the second side frame 123, and the second display portion 112 and the second cover body 124 may be disposed in parallel and spaced from each other. A spacing between the second display portion 112 and the second cover body 124 may be used to dispose a component of the foldable electronic device 100, for example, an antenna or a circuit board component.

In some embodiments provided in this application, a cover body and a frame may be two parts of a housing of the foldable electronic device 100. The cover body is connected to the frame, and a connection form may include but is not limited to an assembly manner like clamping, adhesion, welding, riveting, or clearance fit. A connection relationship between the cover and the frame is usually difficult to be split. In some other embodiments provided in this application, a cover body and a frame may be two different components. The cover body and the frame are assembled together to form a housing of the foldable electronic device 100.

The hinge 125 may be connected between the first housing 126 and the second housing 127. Under an action of the hinge 125, the first housing 126 and the second housing 127 may be close to or away from each other. Correspondingly, the first display portion 111 of the flexible display 110 and the second display portion 112 of the flexible display 110 may be close to or far away from each other, so that the flexible display 110 may be folded or unfolded.

In an example, the hinge 125 may include, for example, a main shaft, a first connection component, and a second connection component. The first connection component may be fastened to the first cover body 122, the second connection component may be fastened to the second cover body 124, and the first connection component and the second connection component may rotate relative to the main shaft. Mutual movement of the first connection component and the second connection component may drive mutual movement of the first housing 126 and the second housing 127, to implement an opening and closing function of the foldable electronic device 100.

It should be understood that, in some embodiments, the first housing 126 may be a housing on a side on which a primary display of the foldable electronic device 100 is located, and the second housing 127 may be a housing on a side on which a secondary display of the foldable electronic device 100 is located. In some other embodiments, the first housing 126 may be a housing on a side on which a secondary display of the foldable electronic device 100 is located, and the second housing 127 may be a housing on a side on which a primary display of the foldable electronic device 100 is located. This is not limited in this application. For ease of description and understanding, this embodiment of this application is described by using an example in which the first housing 126 is a housing on a side on which a primary display of the foldable electronic device 100 is located, and the second housing 127 is a housing on a side on which a secondary display of the foldable electronic device 100 is located.

The foldable electronic device 100 shown in FIG. 1 is currently in an unfolded state. In the unfolded state, an angle between the first housing 126 and the second housing 127 may be approximately 180°. The flexible display 110 may be in the unfolded state shown in FIG. 1.

FIG. 2 shows a possible folded state of the foldable electronic device 100. FIG. 2 shows an outward folded state (the outward folded state may be referred to as an out-folded state for short) of the foldable electronic device 100. The outward folded state shown in FIG. 2 may be, for example, a left-right outward folded state or an up-down outward folded state.

With reference to FIG. 1 and FIG. 2, the following describes a possible folded state of the foldable electronic device 100.

In this embodiment of this application, that the foldable electronic device 100 is in a folded state may mean that the foldable electronic device 100 is currently bent, and the foldable electronic device 100 reaches a maximum bent degree. In this case, the first cover body 122 and the second cover body 124 may be in parallel, spaced from each other, and disposed face-to-face, a spacing distance between the first cover body 122 and the second cover body 124 is minimum, and at least a part of the first housing 126 and at least a part of the second housing 127 are accommodated in space enclosed by the flexible display 110; and the first display portion 111, the first housing 126, the second housing 127, and the second display portion 112 are sequentially stacked. Similarly, the first display portion 111 and the second display portion 112 may be parallel to each other and spaced from each other, and the spacing distance between the first cover body 122 and the second cover body 124 is less than a spacing distance between the first display portion 111 and the second display portion 112. In this case, the first display portion 111 and the second display portion 112 may be considered to be located on different planes.

With reference to FIG. 1 and FIG. 2, when the foldable electronic device 100 is in an out-folded state, the first cover body 122 and the second cover body 124 may be close to each other, and the first display portion 111 and the second display portion 112 may be close to each other. The first display portion 111, the second display portion 112, and the foldable display portion 123 may form a housing accommodation area used to accommodate the first cover body 122, the second cover body 124, and the hinge 125. In other words, the first cover body 122, the second cover body 124, and the hinge 125 may be accommodated in space of a spacing between the first display portion 111 and the second display portion 112.

The foldable electronic device 100 may switch between a folded state and an unfolded state. When the foldable electronic device 100 is in a folded state, space occupied by the foldable electronic device 100 is small. When the foldable electronic device 100 is in an unfolded state, the foldable electronic device 100 may display a large screen, to increase a view range available for a user.

However, it is assumed that the foldable electronic device 100 is in a folded state. The length (or a size) of a ground plane of the foldable electronic device 100 is reduced by half compared with that in an unfolded state. This likely causes a change of an environment around an antenna laid out in the foldable electronic device 100, resulting in performance deterioration of an entire antenna system. Consequently, antenna performance of the foldable electronic device 100 in a folded state is significantly degraded compared with that in an unfolded state. In addition, a main body on a secondary display side may directly cover a main body on a primary display side, for example, the second housing 127 directly covers the first housing 126. As a result, a radiation environment of an antenna on the primary display side deteriorates, and efficiency of the antenna laid out on the primary display side declines. Consequently, the antenna performance of the foldable electronic device 100 in a folded state is significantly degraded compared with that in an unfolded state, and the antenna performance is poor. Therefore, how to improve the antenna performance of the foldable electronic device 100 in a folded state is a problem that needs to be urgently resolved.

Based on the foregoing content, embodiments of this application provide a foldable electronic device, to improve antenna performance of the foldable electronic device in a folded state.

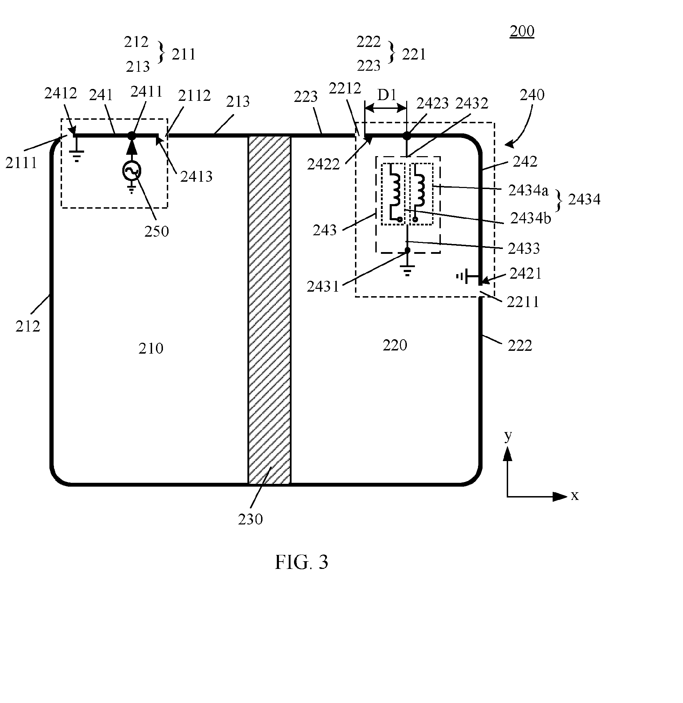

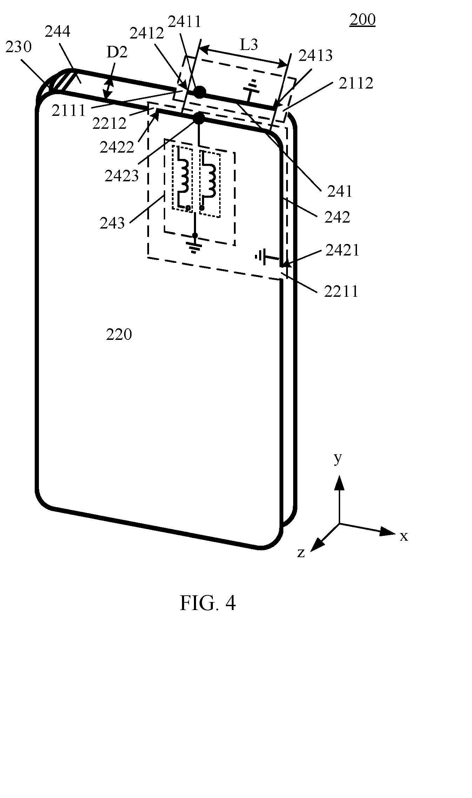

FIG. 3 and FIG. 4 each are a diagram of a structure of a foldable electronic device 200 according to an embodiment of this application. FIG. 3 is a diagram of a structure of the foldable electronic device 200 in an unfolded state. FIG. 4 is a diagram of a structure of the foldable electronic device 200 in a folded state. It should be understood that the foldable electronic device 200 may be the foldable electronic device 100.

As shown in FIG. 3 and FIG. 4, the foldable electronic device 200 may include a first housing 210, a second housing 220, a hinge 230, and an antenna 240.

The hinge 230 may be located between the first housing 210 and the second housing 220, and the hinge 230 is rotatably connected to the first housing 210 and the second housing 220 separately, so that the first housing 210 and the second housing 220 can rotate relative to each other along the hinge 230, that is, the foldable electronic device 200 can switch between an unfolded state and a folded state.

It should be noted that this embodiment of this application is described by using an example in which the first housing 210 is a housing on a side on which a primary display of the foldable electronic device 200 is located, and the second housing 220 is a housing on a side on which a secondary display of the foldable electronic device 200 is located. In some other embodiments, the first housing 210 may alternatively be a housing on a side on which a secondary display of the foldable electronic device 200 is located, and the second housing 220 is a housing on a side on which a primary display of the foldable electronic device 200 is located. This is not limited in this application.

It should be further noted that this embodiment of this application is described by using an example in which an extension direction of the hinge 230 is parallel to a length direction (direction y) of the foldable electronic device 200. In other words, this embodiment of this application is described by using an example in which the foldable electronic device 200 is a foldable electronic device that can be folded leftward and rightward. In some other embodiments, an extension direction of the hinge 230 may be parallel to a width direction (direction x) of the foldable electronic device 200, that is, the foldable electronic device 200 may be a foldable electronic device that can be folded upward and downward. This is not limited in this application.

The first housing 210 may include a first side frame 211, and the second housing 220 includes a second side frame 221.

The antenna 240 may include a first radiator 241 and a second radiator 242, the first radiator 241 may include a part of the first side frame 211, and the second radiator 242 may include a part of the second side frame 221. In other words, the first radiator 241 is disposed at the first housing 210, and the second radiator 242 is disposed at the second housing 220.

A feed point 2411 is disposed on the first radiator 241, and is configured to feed the antenna 240. For example, the feed point 2411 may be connected to a radio frequency source 250 of the foldable electronic device, to receive a radio frequency signal output by the radio frequency source 250. In addition, the length L2 of the second radiator 242 may be greater than the length L1 of the first radiator 241, that is, L2>L1. For example, L2 may be equal to 1.2L1, 1.5L1, 1.7L1, 1.8L1, or 2L1. It may be understood that the foregoing specific numerical relationship between L2 and L1 is merely an example, and is not a limitation on this application. The specific numerical relationship may be adjusted according to an actual production and design requirement.

When the foldable electronic device 200 is in a folded state, in a direction in which the first housing 210 and the second housing 220 are stacked, that is, in a thickness direction (direction z) of the foldable electronic device 200, the first radiator 241 and the second radiator 242 are disposed opposite to each other at a first spacing 243, and at least a part of the first radiator 241 overlaps the second radiator 242, so that the first radiator 241 is coupled to the second radiator 242.

It should be noted that, when the foldable electronic device 200 is in a folded state, the first radiator 241 and the second radiator 242 are disposed opposite to each other, and a coupling capacitance is formed between the first radiator 241 and the second radiator 242, to excite the second radiator 242 to generate an excitation resonance signal. In other words, the second radiator 242 may be used as a parasitic stub of the first radiator 241.

It may be understood that, to ensure coupling strength between the first radiator 241 and the second radiator 242, a size of the first spacing 244 may depend on an overlapping length/a coupling length L3 of the first radiator 241 and the second radiator 242 in a folded state. For example, when the coupling length L3 between the first radiator 241 and the second radiator 242 is small, to ensure the coupling strength, the size of the first spacing 244 may be reduced.

In some embodiments, to further ensure the coupling strength, when the foldable electronic device 200 is in a folded state, the coupling length L3 between the first radiator 241 and the second radiator 242 may be greater than 1/2 of the length L1 of the first radiator 241. It should be understood that a range of the coupling length L3 between the first radiator 241 and the second radiator 242 is merely an example, and may be adjusted according to an actual production and design requirement. For example, in some other embodiments, when the foldable electronic device 200 is in a folded state, L3 may alternatively be less than 1/2 of the length L1 of the first radiator 241. This is not limited in this application.

When the first radiator 241 operates, radio frequency energy of the first radiator 241 can be transferred to the second radiator 242 through coupling, to excite the second radiator 242 to generate radiation, so that the second radiator 242 serves as the parasitic stub and operates together with the first radiator 241. In addition, the length L2 of the second radiator 242 is set to be greater than the length L1 of the first radiator 241. This helps further improve a radiation capability of the second radiator 242, to improve a radiation capability of the radio frequency energy transferred by the first radiator 241 to the second radiator 242 through coupling. In this way, radiation efficiency of the first radiator 241 can be improved, and an operating bandwidth of the antenna can be extended. This helps reduce adverse impact on antenna performance caused by a reduced ground plane size or overlapping coverage of the housings in a folded state, to improve the antenna performance of the foldable electronic device 200 in a folded state, so that the foldable electronic device 200 has a good radiation characteristic.

In some embodiments, to further improve the radiation efficiency of the first radiator 241 and extend the operating bandwidth of the antenna, the length L2 of the second radiator 242 and the length L1 of the first radiator 241 may satisfy: $L2 \geq 1.5L1$.

In some embodiments provided in this application, the first side frame 211 may have a first location 2111 and a second location 2112. The first radiator 241 may include the first side frame 211 between the first location 2111 and the second location 2112.

In an example, the first radiator 241 may include the part of the first side frame 211 between the first location 2111 and the second location 2112, and the part of the first side frame 211 may be a conductive side frame. In another example, the first radiator 241 may further include an internal conductor (for example, a liquid crystal polymer) of the part of the first side frame 211 between the first location 2111 and the second location 2112, and the part of the first side frame 211 may be a non-conductive side frame. The following embodiments may also be understood correspondingly.

In some embodiments, the first side frame 211 may include a first side 212 and a second side 213 that intersect at an angle, and the first side 212 may be parallel to the extension direction of the hinge 230. In an example, the first location 2111 and the second location 2112 both are located on the first side 212; or the first location 2111 and the second location 2112 both are located on the second side 213. In other words, the first radiator 241 may be located on a wide side (in the direction x) or a long side (in the direction y) of the first housing 210. In other words, the first radiator 241 is in a straight line shape. In another example, the first location 2111 is located on the first side 212, and the second location 2112 is located on the second side 213; or the first location 2111 is located on the second side 213, and the second location 2112 is located on the first side 212. In other words, the first radiator 241 may be located on both a wide side (in the direction x) and a long side (in the direction y) of the first housing 210. In other words, the first radiator 241 is in a straight line shape. The following embodiments may also be understood correspondingly.

Further, in some embodiments, the first location 2111 is located in an intersection area between the first side 212 and the second side 213; or the second location 2112 is located in an intersection area between the first side 212 and the second side 213.

It may be understood that the first side 212 and the second side 213 may have an overlapping area. The overlapping area may be understood as the intersection area between the first side 212 and the second side 213. When a junction of the first side 212 and the second side 213 is arc-shaped, an arc-shaped frame may be understood as the overlapping area/intersection area of the first side 212 and the second side 213. When a junction of the first side 212 and the second side 213 is at a right angle, the overlapping area/intersection area of the first side 212 and the second side 213 may be understood as an area whose distance to the intersection is within a first threshold (for example, 3 mm). The following embodiments may also be understood correspondingly.

In some embodiments provided in this application, the second side frame 221 may have a third location 2211 and a fourth location 2212. The second radiator 242 may include the second side frame 221 between the third location 2211 and the fourth location 2212.

In some embodiments, the second side frame 221 may include a third side 222 and a fourth side 223 that intersect at an angle, and the third side 222 may be parallel to the extension direction of the hinge 230. In an example, the third location 2211 and the fourth location 2212 both are located on the third side 222; or the third location 2211 and the fourth location 2212 both are located on the fourth side 223. In other words, the second radiator 242 may be located on a wide side (in the direction x) or a long side (in the direction y) of the second housing 220. In another example, the third location 2211 is located on the third side 222, and the fourth location 2212 is located on the fourth side 223; or the third location 2211 is located on the fourth side 223, and the fourth location 2212 is located on the third side 222. In other words, the second radiator 242 may be located on both a wide side (in the direction x) or a long side (in the direction y) of the second housing 220.

Further, in some embodiments, the third location 2211 is located in an intersection area between the third side 222 and the fourth side 223; or the fourth location 2212 is located in an intersection area between the third side 222 and the fourth side 223.

It may be understood that, in embodiments of this application, a location of the first radiator 241 on the first side frame 211 and a location of the second radiator 242 on the second side frame 221 are not specially limited, provided that in a folded state, the first radiator 241 can be coupled to the second radiator 242 and the length L2 of the second radiator 242 is greater than the length L1 of the first radiator 241.

It may be further understood that, the following describes in more detail a location layout of the first radiator 241 on the first side frame 211 and a location layout of the second radiator 242 on the second side frame 221 with reference to the accompanying drawings. This is merely a brief description herein.

In some embodiments provided in this application, the first radiator 241 may have a first end 2412 and a second end 2413. The first end 2412 may be a ground end, and is configured to ground the first radiator 241, and the second end 2413 may be an open end that is not grounded. In an example, the feed point 2411 may be at a location that is on the first radiator 241 and that is close to the second end 2413, and is connected to the radio frequency source 250.

Specifically, the first side frame 211 may separately provide a gap at the first location 2111 and the second location 2112, to form the first end 2412 and the second end 2413 of the first radiator 241, and the first side frame 211 between the two gaps forms the first radiator 241.

It may be understood that specific locations of the first end 2412 and the second end 2413 on the first side frame 211 may be determined based on actual settings of the first location 2111 and the second location 2112. For example, the first end 2412 and the second end 2413 both are located on the first side 212; or the first end 2412 and the second end 2413 both are located on the second side 213.

In some embodiments provided in embodiments of this application, the second radiator 242 may have a third end 2421 and a fourth end 2422. The third end 2421 may be a ground end, and is configured to ground the second radiator 242, and the fourth end 2422 may be an open end that is not grounded.

Specifically, the second side frame 221 may separately provide a gap at the third location 2211 and the fourth location 2212, to form the third end 2421 and the fourth end 2422 of the second radiator 242, and the second side frame 221 between the two gaps forms the second radiator 242.

It may be understood that specific locations of the third end 2421 and the fourth end 2422 on the second side frame 221 may be determined based on actual settings of the third location 2211 and the fourth location 2212. For example, the third end 2421 and the fourth end 2422 both are located on the third side 222; or the third end 2421 and the fourth end 2422 both are located on the fourth side 223.

It may be understood that, because the second radiator 242 serving as the parasitic stub is grounded, when the foldable electronic device 200 is in a folded state, the first radiator 241 is coupled to the second radiator 242, so that the second radiator 242 can better use a ground plane current to generate radiation together. In this case, an electrical length of the second radiator 242 is a quarter of an operating wavelength of the second radiator 242, that is, the second radiator 242 is a quarter-wave antenna.

It should be understood that the electrical length may be expressed by multiplying a physical length (namely, a mechanical length or a geometric length) by a ratio of transmission time of an electrical or electromagnetic signal in a medium to time required by the signal to travel, in free space, for a distance that is the same as the physical length of the medium. The electrical length may satisfy the following formula:

$$\overline{L} = L \times \frac{a}{b},$$

where L is the physical length, a is the transmission time of the electrical or electromagnetic signal in the medium, and b is the transmission time in the free space.

Alternatively, the electrical length may be a ratio of a physical length (namely, a mechanical length or a geometric length) to a wavelength of a transmitted electromagnetic wave. The electrical length may satisfy the following formula:

$$\overline{L} = \frac{L}{\lambda},$$

where L is the physical length, and $\lambda$ is the wavelength of the electromagnetic wave.

In some embodiments, to better meet a communication requirement, the antenna 240 may further include a switching circuit 243. One end 2431 of the switching circuit 243 is grounded, and another end 2432 of the switching circuit 243 is connected to the second radiator 242, to adjust a resonance frequency of the second radiator 242, namely, the parasitic stub, so that the antenna 240 can cover different frequency bands.

In an example, the switching circuit 243 may include a switch component 2433 and a plurality of different matching branches 2434 disposed in parallel. The plurality of different matching branches 2434 may include, for example, a matching branch 2434a and a matching branch 2434b. One end of the switch component 2433 is grounded, another end of the switch component 2433 separately gates and is connected to one end of the matching branch 2434a and one end of the matching branch 2434b, and another end of the matching branch 2434a and another end of the matching branch 2434b are separately connected to the second radiator 242. In other words, the one end of the switch component 2433 forms the one end 2431 of the switching circuit 243, and the another end of the matching branch 2434a and the another end of the matching branch 2434b jointly form the another end 2432 of the switching circuit 243.

For example, the matching branch 2434a and the matching branch 2434b each may include a capacitor, a capacitor, or a 0-ohm resistor. In addition, the plurality of different matching branches 2434 may alternatively include three, four, or five different matching branches. This is not limited in this application. The switch component 2433 may include, for example, but is not limited to, a single-pole double-throw switch or a double-pole double-throw switch.

It may be understood that a specific structure of the switching circuit 243 is merely an example, and may be adjusted according to an actual production and design requirement. This is not limited in this application.

In some embodiments, a connection point 2423 may be disposed on the second radiator 242, and the connection point 2423 may be at a location that is on the second radiator 242 and that is close to the fourth end 2422, and is configured to connect to the another end 2432 of the switching circuit 243.

In some embodiments, when the length L2 of the second radiator 242 is greater than the length L1 of the first radiator 241, that is, L2≥L1, to better meet a coupling requirement of the first radiator 241 and the second radiator 242, a distance D1 between the connection point 2423 and the fourth end 2422 of the second radiator 242 may satisfy: 0≤D1≤1/2L2. For example, the distance D1 between the connection point 2423 and the fourth end 2422 may be 1/5L2, 1/4L2, 1/3L2, or 1/2L2. This is not limited in this application.

Further, in some embodiments, when L2≥1.5L1, a distance D1 between the connection point 2423 and the fourth end 2422 of the second radiator 242 may satisfy: 1/3L2≤D1≤1/2L2. For example, the distance D1 between the connection point 2423 and the fourth end 2422 may be 1/3L2, 2/5L2, 3/7L2, or 1/2L2. This is not limited in this application.

It may be understood that a range that the distance D1 between the connection point 2423 and the fourth end 2422 of the second radiator 242 meets is merely an example, and may be adjusted based on the lengths of the first radiator 241 and the second radiator 242. This is not limited in this application.

The foregoing describes structures of the foldable electronic device 200. The following further describes, with reference to the accompanying drawings, the location layout of the first radiator 241 on the first side frame 211 and the location layout of the second radiator 242 on the second side frame 221.

Still as shown in FIG. 4, in the embodiment shown in FIG. 4, the first location 2111 and the second location 2112 of the first side frame 211 each are at a location that is on the second side 213 and that is away from the hinge 230. The first location 2111 is located in the intersection area between the first side 212 and the second side 213, and the second location 2112 is at the location that is on the second side 213 and that is away from the intersection area. In other words, the first end 2412 of the first radiator 241 is formed in the intersection area between the first side 212 and the second side 213, and is used for grounding; the second end 2413 of the first radiator 241 is formed at a location that is on the second side 213 and that is away from the intersection area; and the feed point 2411 is at the location that is on the first radiator 241 and that is close to the second end 2413. In other words, the first radiator 241 is located on the wide side (in the direction x) of the foldable electronic device 200, and is in the straight line shape.

The third location 2211 of the second side frame 221 is located on the third side 222, and the fourth location 2212 of the second side frame 221 is located on the fourth side 223. In other words, the third end 2421 of the second radiator 242 is formed on the third side 222 and is used for grounding; the fourth end 2422 of the second radiator 242 is formed on the fourth side 223; and the connection point 2423 is at the location that is on the second radiator 242 and that is close to the fourth end 2422. In other words, the second radiator 242 is located on both the wide side (in the direction x) and the long side (in the direction y) of the foldable electronic device, and is in an L shape. In addition, the length L2 of the second radiator 242 is twice the length L1 of the first radiator 241, and the distance D1 between the connection point 2423 and the fourth end 2422 is 2/5L2.

When the foldable electronic device 200 is in a folded state, in the thickness direction (direction z) of the foldable electronic device 200, the first radiator 241 and the second radiator 242 are disposed opposite to each other at the first spacing 243, and all the first radiator 241 overlaps the second radiator 242. In other words, in a folded state, the coupling length L3 between the first radiator 241 and the second radiator 242 is equal to the length L1 of the first radiator 241. The size D2 of the first spacing 243 may satisfy: 0.8 mm$\leq$D2$\leq$1.8 mm. For example, D2 may be 0.8 mm, 1.0 mm, 1.3 mm, or 1.7 mm. A specific value of D2 may be determined based on specific data of the coupling length L3 between the first radiator 241 and the second radiator 242. This is not limited in this application.

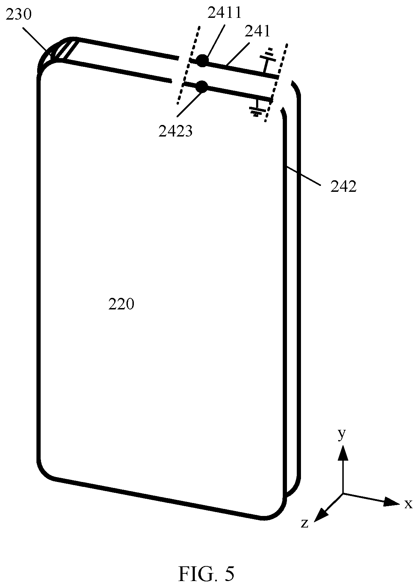

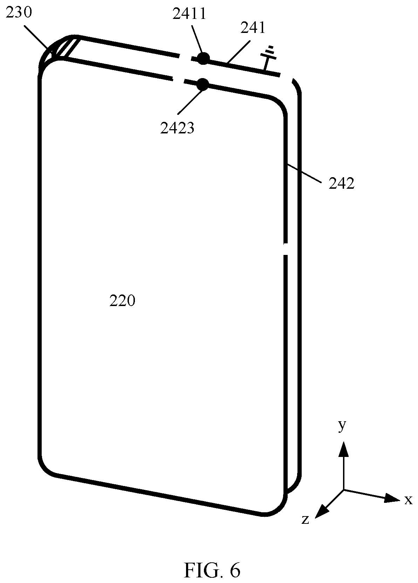

It may be understood that, to further describe technical effect of the embodiment of this application, FIG. 5 and FIG. 6 are provided for comparison.

FIG. 5 is a diagram of a structure of a foldable electronic device in a folded state. A difference from the embodiment shown in FIG. 4 lies in that, in an embodiment shown in FIG. 5, the length of the first radiator 241 is equal to the length of the second radiator 242.

FIG. 6 is another diagram of a structure of a foldable electronic device in a folded state. A difference from the embodiment shown in FIG. 4 lies in that, in an embodiment shown in FIG. 6, when the foldable electronic device is in a folded state, the second radiator 242 is used as a parasitic stub of the first radiator 241 and is not grounded.

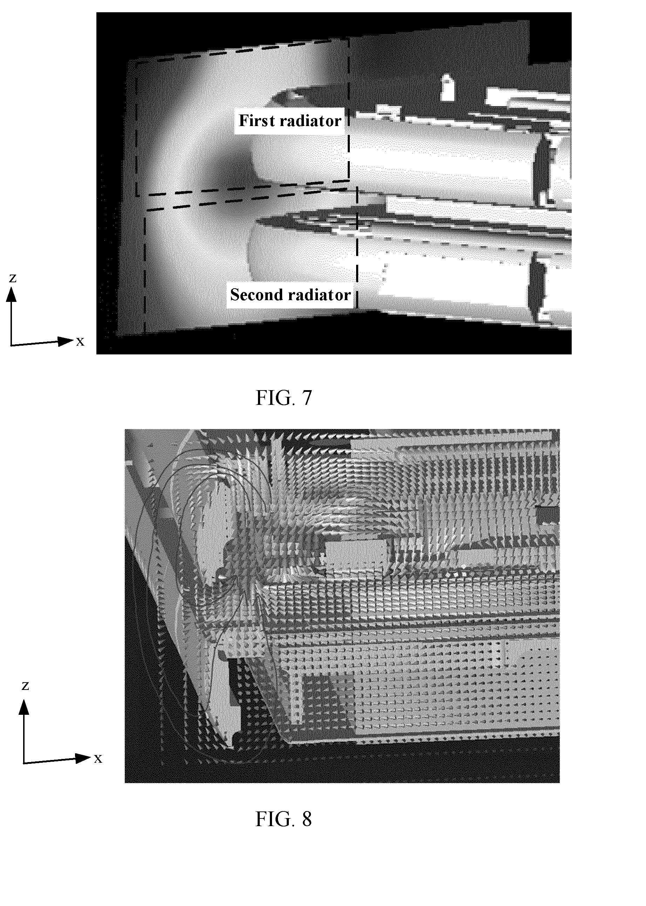

FIG. 7 to FIG. 11 are diagrams of simulation results of an antenna in a case in which a foldable electronic device 200 is in a folded state according to an embodiment of this application.

FIG. 7 is a scalar distribution diagram of a local magnetic field of an antenna on an outer plane at the top of the foldable electronic device in FIG. 4 in a case in which the foldable electronic device is in a folded state, where the outer plane is parallel to a plane xoz. FIG. 8 is a vector distribution diagram of a local magnetic field of an antenna on a cross section of the foldable electronic device in FIG. 4 in a case in which the foldable electronic device is in a folded state, where the cross section is parallel to a plane xoz. In FIG. 7 and FIG. 8, a direction z is parallel to a thickness direction of the foldable electronic device, and a direction x is parallel to a width direction (namely, a horizontal direction) of the foldable electronic device. When the foldable electronic device 200 is in a folded state, the first spacing 244 between the first radiator 241 and the second radiator 242 is 1.8 mm.

As shown in FIG. 7 and FIG. 8, a magnetic field radiation area of the antenna is dispersed into two areas shown in dashed-line boxes in the figure, that is, two areas in which the first radiator 241 and the second radiator 242 are located. In other words, the second radiator 242 serves as a parasitic stub of the first radiator 241, so that the magnetic field radiation area of the antenna can be dispersed. This is equivalent to increasing the width of the first radiator 241. In this way, a radiation size of the antenna is increased, and antenna performance of the foldable electronic device in a folded state is improved.

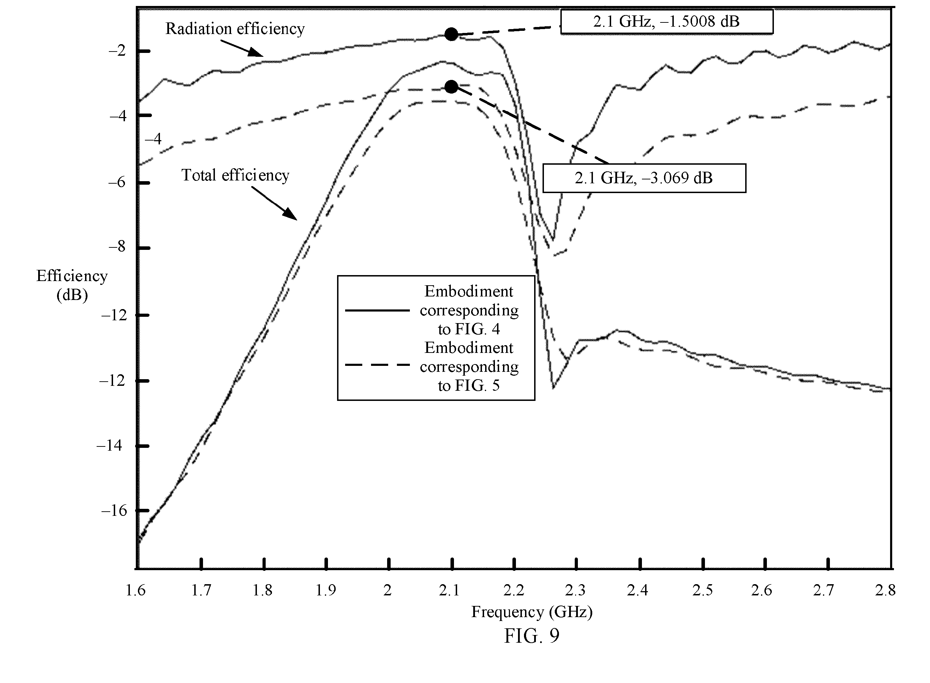

FIG. 9 is a diagram of simulation results of total efficiency and radiation efficiency of an antenna in cases in which the foldable electronic devices shown in FIG. 4 and FIG. 5 are in a folded state.

As shown in FIG. 9, when an operating frequency of the antenna is 2.1 GHz, radiation efficiency of the antenna in the embodiment shown in FIG. 5 is -3.069 dB, and radiation efficiency of the antenna in the embodiment shown in FIG. 4 is -1.5008 dB. Compared with that in FIG. 5, the radiation efficiency of the antenna in FIG. 4 is improved by 1.5682 dB. In other words, in comparison with the embodiment in which the first radiator 241 and the second radiator 242 shown in FIG. 5 have the equal length, in the embodiment shown in FIG. 4, the length of the second radiator 242, that is, the length of a parasitic stub, is set to be greater than the length of the first radiator 234, so that the radiation efficiency of the antenna can be further improved, and an operating bandwidth of the antenna can be extended. This helps reduce adverse impact on antenna performance caused by a reduced ground plane size or overlapping coverage of housings in a folded state, to improve the antenna performance of the foldable electronic device in a folded state, so that the foldable electronic device has a good radiation characteristic.

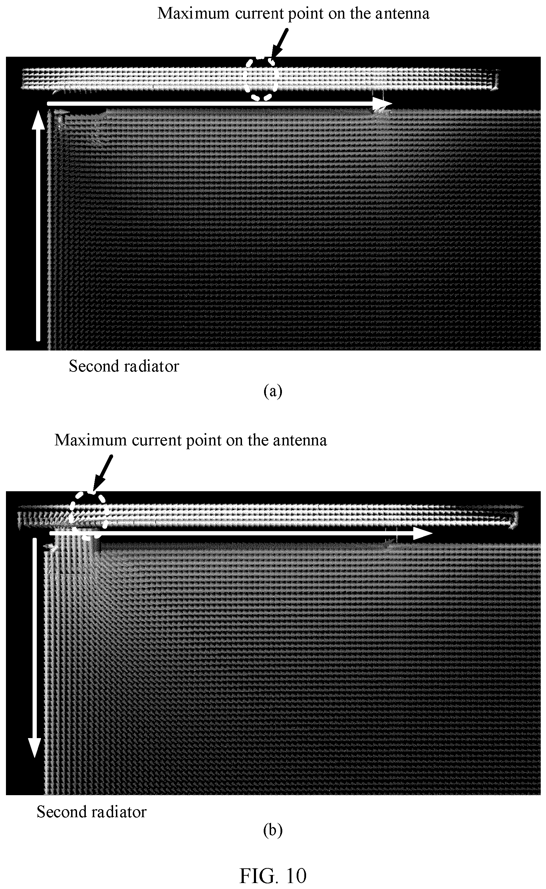

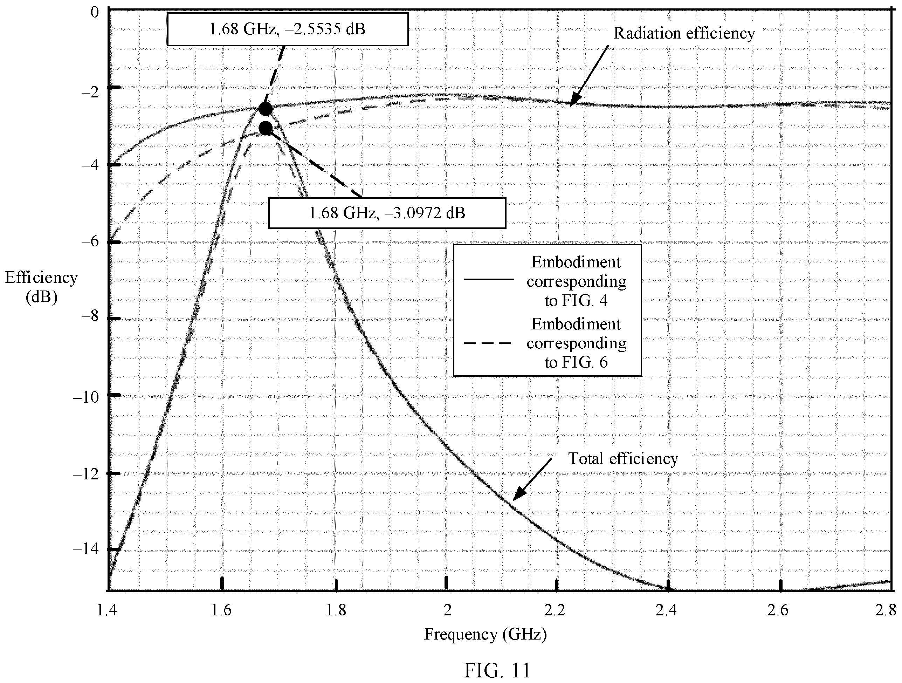

FIG. 10 is a diagram of structures of a current distribution at a location of a second radiator 242 in cases in which the foldable electronic devices shown in FIG. 4 and FIG. 6 are in a folded state. FIG. 11 is a diagram of simulation results of total efficiency and radiation efficiency of an antenna in cases in which the foldable electronic devices shown in FIG. 4 and FIG. 6 are in a folded state. (a) in FIG. 10 is a diagram of a structure of a current distribution at a location of the second radiator 242 shown in FIG. 6. (b) in FIG. 10 is a diagram of a structure of a current distribution at a location of the second radiator 242 shown in FIG. 4. A white arrow in the figure indicates a direction of a current on the second radiator 242.

As shown in (a) in FIG. 10, in the embodiment shown in FIG. 6, directions of currents on the second radiator 242, namely, a parasitic stub, have a same direction. In other words, in a folded state, the second radiator 242 is not grounded, and is parasitic in a 1/2 mode (balanced). In this case, the first radiator 241 is coupled to the second radiator 242 whose electrical length is 1/2 of an operating wavelength. However, in addition, in this mode, because the second radiator 242 is not grounded, a connection between the antenna and a ground plane in the foldable electronic device is weak, and it is difficult to use the ground plane for radiation. As shown in (b) in FIG. 10, in the embodiment shown in FIG. 4, directions of currents on the second radiator 242 have a transverse direction and a longitudinal direction. In other words, in a folded state, the second radiator 242 is parasitic in a 1/4 mode. In this case, the first radiator 241 is coupled to the second radiator 242 whose electrical length is 1/4 of an operating wavelength. In addition, in this mode, because the second radiator 242 is grounded, the antenna can better use a ground plane current to generate radiation.

As shown in FIG. 11, when an operating frequency of the antenna is 1.68 GHz, radiation efficiency of the antenna in the embodiment shown in FIG. 6 is -3.0972 dB, and radiation efficiency of the antenna in the embodiment shown in FIG. 4 is -2.5535 dB. Compared with that in FIG. 6, the radiation efficiency of the antenna in FIG. 4 is improved by 0.5437 dB. In other words, in comparison with the embodiment of being parasitic in a 1/2 mode shown in FIG. 6, in the embodiment shown in FIG. 4, in a folded state, the second radiator 242 is grounded, so that a ground plane current can be better used to generate radiation, to further improve the radiation efficiency of the antenna.

The following continues to describe, with reference to the accompanying drawings, the location layout of the first radiator 241 on the first side frame 211 and the location layout of the second radiator 242 on the second side frame 221.

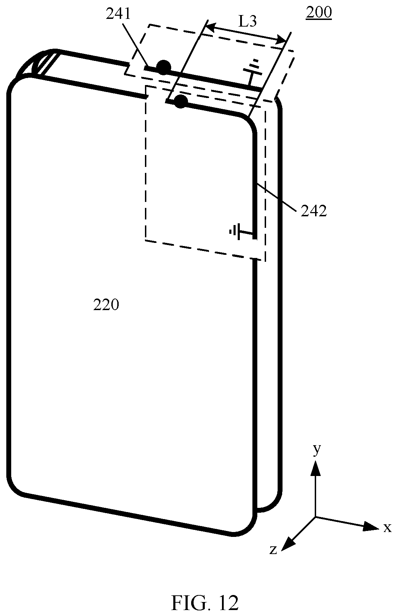

FIG. 12 is another diagram of a structure of a foldable electronic device 200 in a folded state according to an embodiment of this application.

As shown in FIG. 12, a difference from the embodiment shown in FIG. 4 lies in that, when the foldable electronic device 200 is in a folded state, in a thickness direction (direction z) of the foldable electronic device 200, a part of the first radiator 241 overlaps the second radiator 242. In other words, in a folded state, the coupling length L3 between the first radiator 241 and the second radiator 242 is less than the length L1 of the first radiator 241.

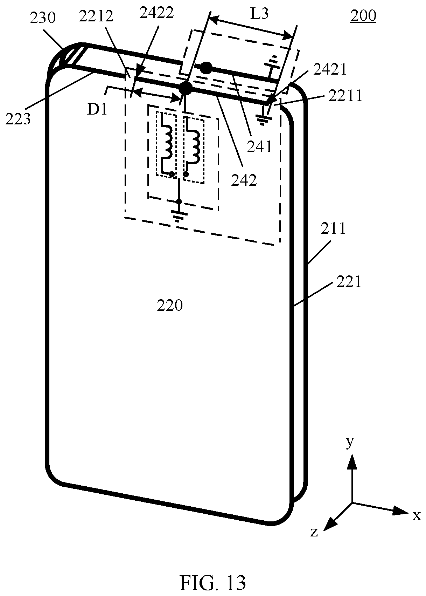

FIG. 13 is a diagram of a structure of a foldable electronic device 200 in a folded state according to an embodiment of this application.

As shown in FIG. 13, a difference from the embodiment shown in FIG. 4 lies in that the third location 2211 and the fourth location 2212 of the second side frame 221 each are located on the fourth side 223. The third location 2211 is away from the hinge 230, and the fourth location 2212 is close to the hinge 230. In other words, the third end 2421 of the second radiator 242 is formed at a location that is on the fourth side 223 and that is away from the hinge 230; the fourth end 2422 is formed at a location that is on the fourth side 223 and that is close to the hinge 230; and the second radiator 242 is in a straight line shape. In addition, the length L2 of the second radiator 242 is 1.8 times the length L1 of the first radiator 241, and the distance D1 between the connection point 2423 and the fourth end 2422 is 1/3L2.

When the foldable electronic device 200 is in a folded state, in a thickness direction (direction z) of the foldable electronic device 200, all the first radiator 241 overlaps the second radiator 242. In other words, in a folded state, the coupling length L3 between the first radiator 241 and the second radiator 242 is equal to the length L1 of the first radiator 241.

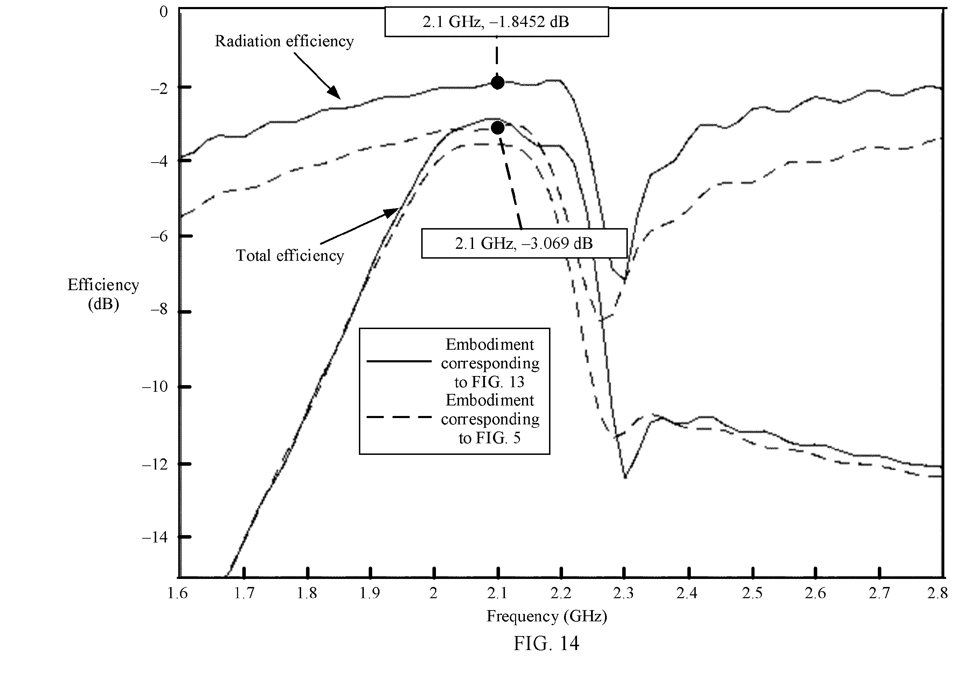

FIG. 14 is a diagram of simulation results of total efficiency and radiation efficiency of an antenna in cases in which the foldable electronic devices shown in FIG. 13 and FIG. 5 are in a folded state.

As shown in FIG. 14, when an operating frequency of the antenna is 2.1 GHz, radiation efficiency of the antenna in the embodiment shown in FIG. 5 is -3.069 dB, and radiation efficiency of the antenna in the embodiment shown in FIG. 13 is -1.8452 dB. Compared with that in FIG. 5, the radiation efficiency of the antenna in FIG. 13 is improved by 1.2238 dB. In other words, in comparison with the embodiment in which the first radiator 241 and the second radiator 242 shown in FIG. 5 have the equal length, in the embodiment shown in FIG. 13, the length of the second radiator 242, that is, the length of a parasitic stub, is set to be greater than the length of the first radiator 234, so that the radiation efficiency of the antenna can be further improved, and an operating bandwidth of the antenna can be extended.

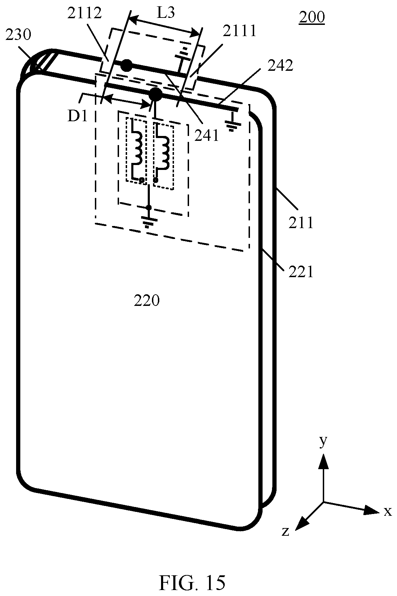

FIG. 15 is another diagram of a structure of a foldable electronic device 200 in a folded state according to an embodiment of this application.

As shown in FIG. 15, a difference from the embodiment shown in FIG. 13 lies in that the first location 2111 and the second location 2112 of the first side frame 211 each are at a location that is on the second side 213 and that is close to the hinge 230. The first location 2111 is away from the hinge 230, and the second location 2112 is close to the hinge 230. In addition, the length L2 of the second radiator 242 is 1.5 times the length L1 of the first radiator 241, and the distance D1 between the connection point 2423 and the fourth end 2422 is 1/3L2.

When the foldable electronic device 200 is in a folded state, in a thickness direction (direction z) of the foldable electronic device 200, all the first radiator 241 overlaps the second radiator 242. In other words, in a folded state, the coupling length L3 between the first radiator 241 and the second radiator 242 is equal to the length L1 of the first radiator 241.

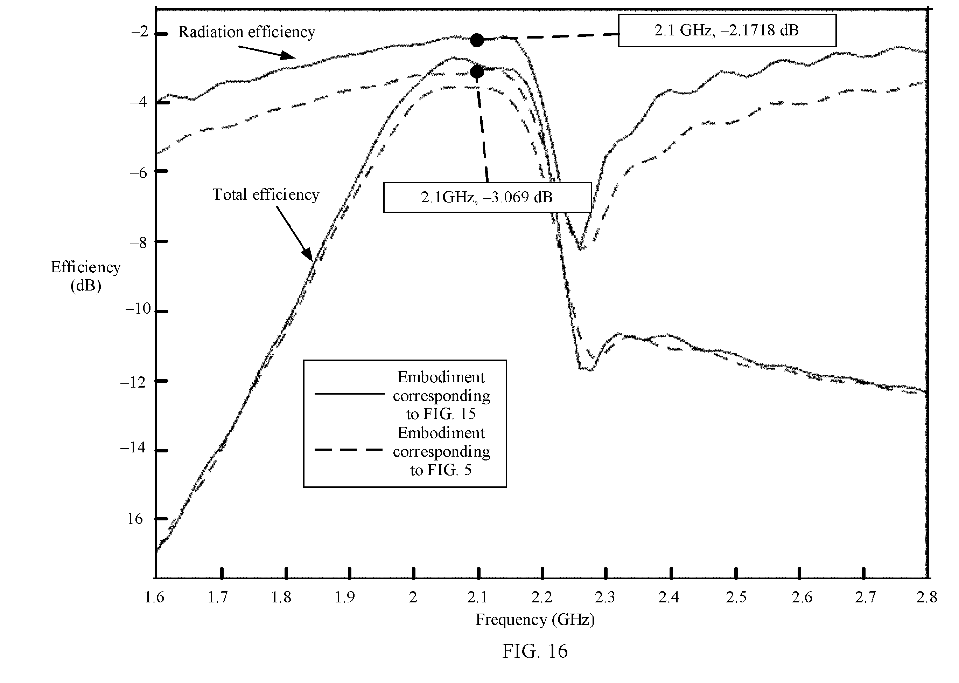

FIG. 16 is a diagram of simulation results of total efficiency and radiation efficiency of an antenna in cases in which the foldable electronic devices shown in FIG. 15 and FIG. 5 are in a folded state.

As shown in FIG. 16, when an operating frequency of the antenna is 2.1 GHz, radiation efficiency of the antenna in the embodiment shown in FIG. 5 is -3.069 dB, and radiation efficiency of the antenna in the embodiment shown in FIG. 4 is -2.1718 dB. Compared with that in FIG. 5, the radiation efficiency of the antenna in FIG. 4 is improved by 0.8972 dB. In other words, in comparison with the embodiment in which the first radiator 241 and the second radiator 242 shown in FIG. 5 have the equal length, in the embodiment shown in FIG. 15, the length of the second radiator 242, that is, the length of a parasitic stub, is set to be greater than the length of the first radiator 234, so that the radiation efficiency of the antenna can be further improved, and an operating bandwidth of the antenna can be extended.

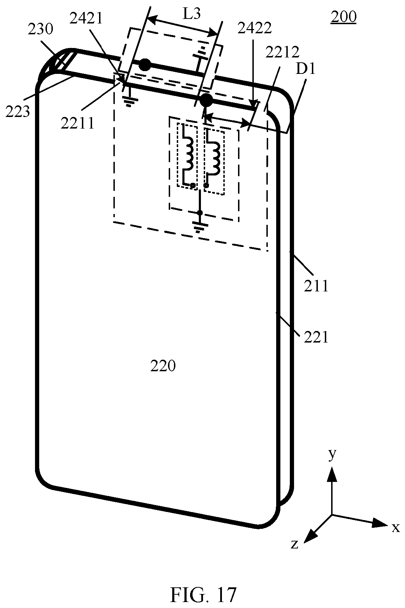

FIG. 17 is another diagram of a structure of a foldable electronic device 200 in a folded state according to an embodiment of this application.

As shown in FIG. 17, a difference from the embodiment shown in FIG. 15 lies in that the third location 2211 and the fourth location 2212 of the second side frame 221 are interchanged on the fourth side 223. In other words, in the embodiment shown in FIG. 17, the third location 2211 is at a location that is on the fourth side 223 and that is close to the hinge 230, and the fourth location 2212 is at a location that is on the fourth side 223 and that is away from the hinge 230. In other words, the third end 2421 of the second radiator 242 is formed at a location that is on the fourth side 223 and that is close to the hinge 230, and the fourth end 2422 is formed at a location that is on the fourth side 223 and that is away from the hinge 230. In addition, the length L2 of the second radiator 242 is 1.8 times the length L1 of the first radiator 241, and the distance D1 between the connection point 2423 and the fourth end 2422 is 1/3L2.

When the foldable electronic device 200 is in a folded state, in a thickness direction (direction z) of the foldable electronic device 200, all the first radiator 241 overlaps the second radiator 242. In other words, in a folded state, the coupling length L3 between the first radiator 241 and the second radiator 242 is equal to the length L1 of the first radiator 241.

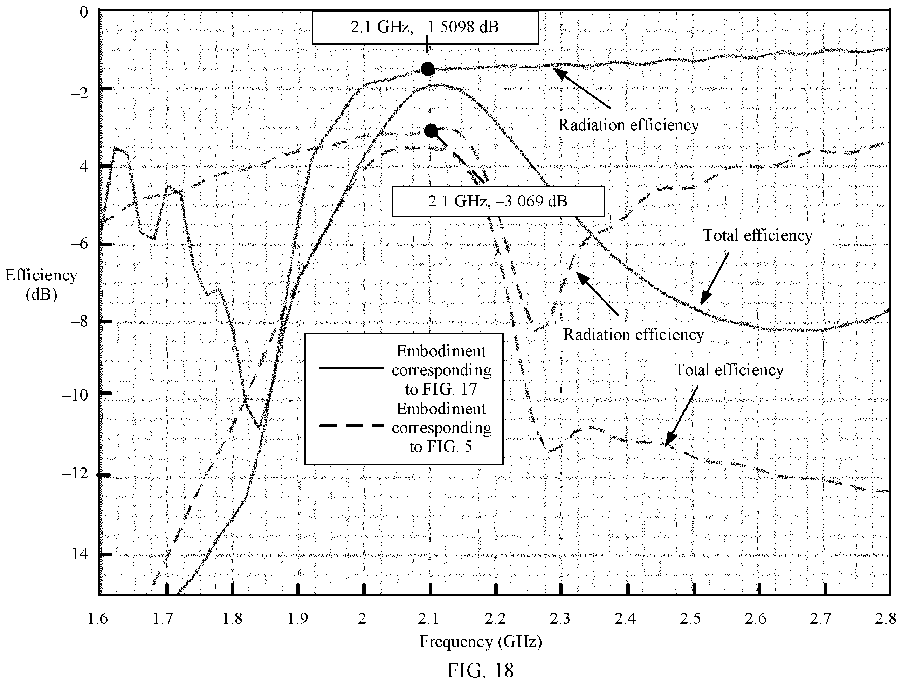

FIG. 18 is a diagram of simulation results of total efficiency and radiation efficiency of an antenna in cases in which the foldable electronic devices shown in FIG. 17 and FIG. 5 are in a folded state.

As shown in FIG. 18, when an operating frequency of the antenna is 2.1 GHz, radiation efficiency of the antenna in the embodiment shown in FIG. 5 is -3.069 dB, and radiation efficiency of the antenna in the embodiment shown in FIG. 18 is -1.5098 dB. Compared with that in FIG. 5, the radiation efficiency of the antenna in FIG. 18 is improved by 1.5592 dB. In other words, in comparison with the embodiment in which the first radiator 241 and the second radiator 242 shown in FIG. 5 have the equal length, in the embodiment shown in FIG. 4, the length of the second radiator 242, that is, the length of a parasitic stub, is set to be greater than the length of the first radiator 234, so that the radiation efficiency of the antenna can be further improved, and an operating bandwidth of the antenna can be extended.

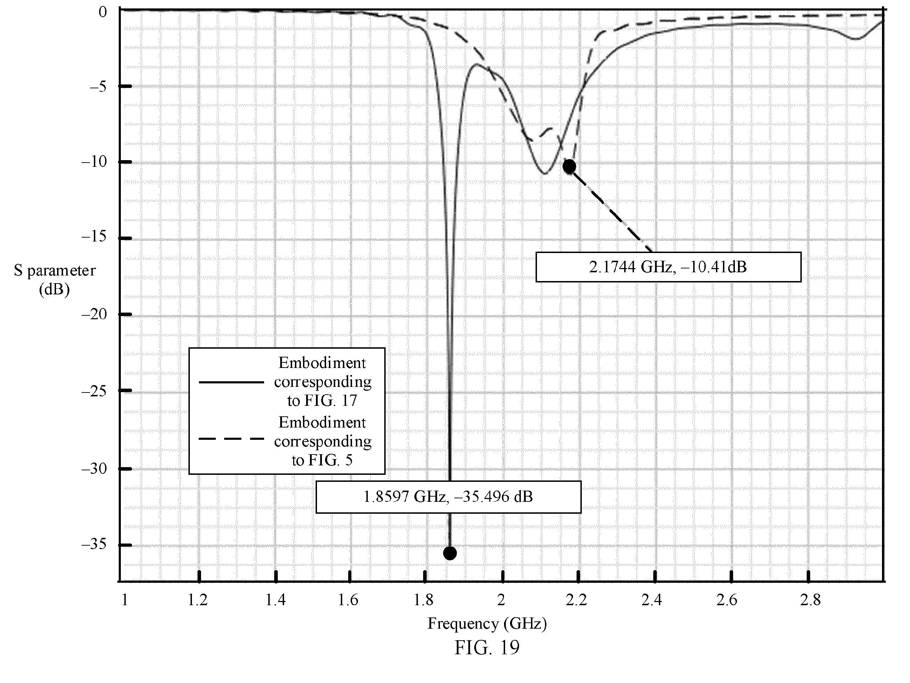

FIG. 19 is a diagram of simulation results of an S parameter of an antenna in cases in which the foldable electronic devices shown in FIG. 17 and FIG. 5 are in a folded state;

As shown in FIG. 19, based on that S11 is less than -4 dB, a resonance bandwidth of the antenna in the embodiment shown in FIG. 17 is greater than a resonance bandwidth of the antenna in the embodiment shown in FIG. 5. In other words, in comparison with the embodiment in which the first radiator 241 and the second radiator 242 shown in FIG. 5 have the equal length, in the embodiment shown in FIG. 17, the length of the second radiator 242, that is, the length of a parasitic stub, is set to be greater than the length of the first radiator 234, so that the resonance bandwidth of the antenna can be further extended.

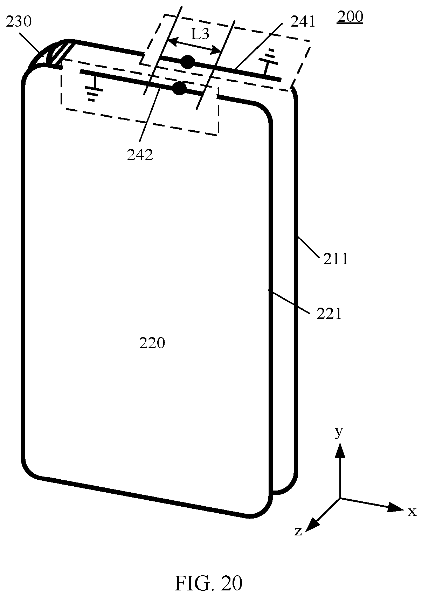

FIG. 20 is another diagram of a structure of a foldable electronic device 200 in a folded state according to an embodiment of this application.

As shown in FIG. 20, a difference from the embodiment shown in FIG. 17 lies in that, when the foldable electronic device 200 is in a folded state, in a thickness direction (direction z) of the foldable electronic device 200, a part of the first radiator 241 overlaps the second radiator 242. In other words, in a folded state, the coupling length L3 between the first radiator 241 and the second radiator 242 is less than the length L1 of the first radiator 241.

It may be understood that, in the embodiment shown in FIG. 20, when the foldable electronic device 200 is in a folded state, coupling between the first radiator 241 and the second radiator 242 is electric field coupling at an open end, and a required electrical coupling amount is small. Therefore, in a folded state, the coupling length L3 between the first radiator 241 and the second radiator 242 may be further less than 1/2 of the length L1 of the first radiator 241.

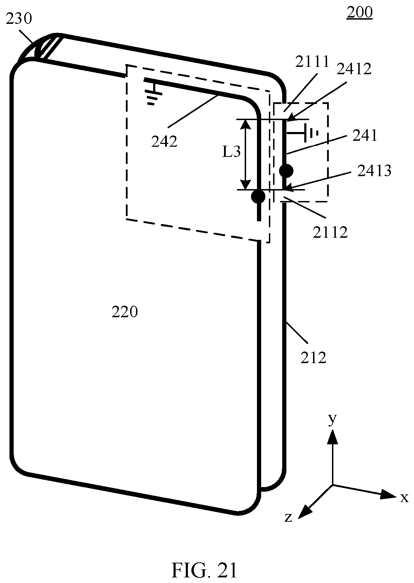

FIG. 21 is another diagram of a structure of a foldable electronic device 200 in a folded state according to an embodiment of this application.

As shown in FIG. 21, a difference from the embodiment shown in FIG. 4 lies in that the first location 2111 and the second location 2112 of the first side frame 211 each are located on the first side 212. In other words, the first end 2412 and the second end 2413 of the first radiator 241 each are formed on the first side 212. In other words, the first radiator 241 is located on a long side (in a direction y) of the foldable electronic device 200, and is in a straight line shape.

When the foldable electronic device 200 is in a folded state, in a thickness direction (direction z) of the foldable electronic device 200, all the first radiator 241 overlaps the second radiator 242. In other words, in a folded state, the coupling length L3 between the first radiator 241 and the second radiator 242 is equal to the length L1 of the first radiator 241.

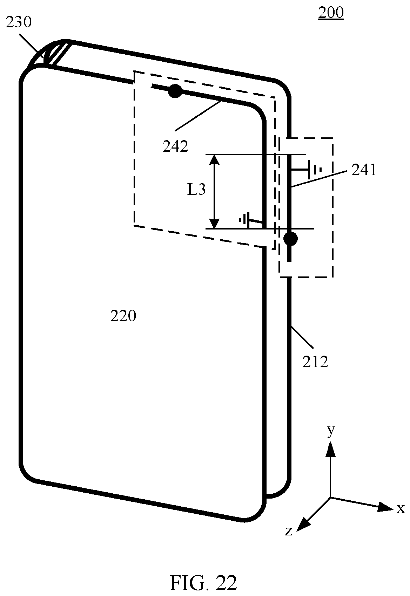

FIG. 22 is another diagram of a structure of a foldable electronic device 200 in a folded state according to an embodiment of this application.

As shown in FIG. 22, a difference from the embodiment shown in FIG. 21 lies in that, when the foldable electronic device 200 is in a folded state, in a thickness direction (direction z) of the foldable electronic device 200, a part of the first radiator 241 overlaps the second radiator 242. In other words, in a folded state, the coupling length L3 between the first radiator 241 and the second radiator 242 is less than the length L1 of the first radiator 241.

It may be understood that, the location layout of the first radiator 241 on the first side frame 211 and the location layout of the second radiator 242 on the second side frame 221 are merely examples, and may be adjusted according to an actual production and design requirement. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A foldable electronic device, comprising:

   a first housing and a second housing, wherein the first housing comprises a first side frame, and the second housing comprises a second side frame;
   a hinge, wherein the hinge is located between the first housing and the second housing, and the hinge is rotatably connected to the first housing and the second housing separately; and
   an antenna, wherein the antenna comprises a first radiator and a second radiator, the first radiator comprises a part of the first side frame, and the second radiator comprises a part of the second side frame, wherein
   a feed point is disposed on the first radiator, and is configured to feed the antenna, and a length of the second radiator is greater than a length of the first radiator; and
   when the foldable electronic device is in a folded state, in a thickness direction of the foldable device, the first radiator and the second radiator are disposed opposite to each other at a first spacing, and at least a part of the first radiator overlaps the second radiator, so that the first radiator is coupled to the second radiator.

2. The foldable electronic device according to claim 1, wherein the length L1 of the first radiator and the length L2 of the second radiator satisfy: L2≥1.5L1.

3. The foldable electronic device according to claim 1 or 2, wherein

   the first radiator comprises a first end and a second end, the first end is grounded, and the feed point is at a location that is on the first radiator and that is close to the second end; and
   the second radiator comprises a third end and a fourth end, and the third end is grounded.

4. The foldable electronic device according to claim 3, wherein the foldable electronic device further comprises a switching circuit, a connection point is disposed on the second radiator, and the connection point is at a location that is on the second radiator and that is close to the fourth end; and
   one end of the switching circuit is grounded, and another end of the switching circuit is connected to the connection point, to adjust a resonance frequency of the second radiator.

5. The foldable electronic device according to claim 4, wherein a distance D1 between the connection point and the fourth end satisfies: 1/3L2≤D1≤1/2L2, wherein L2 is the length of the second radiator.

6. The foldable electronic device according to claim 4 or 5, wherein the switching circuit comprises a switch component and a plurality of matching branches in parallel with the device, one end of the switch component is grounded, another end of the switch component is connected to the plurality of matching branches, and other ends of the plurality of matching branches are connected to the connection point; and the switch component switches between the plurality of matching branches, to adjust the resonance frequency of the second radiator.

7. The foldable electronic device according to any one of claims 1 to 6, wherein the first side frame has a first location and a second location, and the second side frame has a third location and a fourth location;

   the first radiator comprises the first side frame between the first location and the second location; and
   the second radiator comprises the second side frame between the third location and the fourth location.

8. The foldable electronic device according to claim 7, wherein the first side frame comprises a first side and a second side that intersect at an angle, and the first side is parallel to an extension direction of the hinge; and

   the first location and the second location are on the first side; or
   the first location and the second location are on the second side.

9. The foldable electronic device according to claim 8, wherein the second side frame comprises a third side and a fourth side that intersect at an angle, and the third side is parallel to the extension direction of the hinge; and

   the third location and the fourth location are on the third side;
   the third location and the fourth location are on the fourth side; or
   the third location is on the third side, and the fourth location is on the fourth side.

10. The foldable electronic device according to claim 9, wherein the first location is in an overlapping area of the first side and the second side, and the third location is in an overlapping area of the third side and the fourth side.

11. The foldable electronic device according to any one of claims 1 to 10, wherein when the foldable setting is in a folded state, a length L3 of an overlapping portion of the first radiator and the second radiator satisfies: L3>1/2L1, wherein L1 is the length of the first radiator.

110
111     113     112

100

123 } 127
124 }

122  121     125

126

FIG. 1

100

111

122/124

123
112

125  121

FIG. 2

FIG. 3

FIG. 4

FIG. 5

FIG. 6

FIG. 7

FIG. 8

FIG. 9

Maximum current point on the antenna

Second radiator

(a)

Maximum current point on the antenna

Second radiator

(b)

FIG. 10

FIG. 11

FIG. 12

FIG. 13

FIG. 14

FIG. 15

FIG. 16

FIG. 17

FIG. 18

FIG. 19

FIG. 20

FIG. 21

230

200

242

241

L3

220

212

y

x

z

FIG. 22

# EP 4 557 510 A1

## INTERNATIONAL SEARCH REPORT

| International application No. |
| --- |
| **PCT/CN2023/135497** |

### A. CLASSIFICATION OF SUBJECT MATTER

H01Q1/24(2006.01)i;  H01Q1/22(2006.01)i;  H01Q1/36(2006.01)i

According to International Patent Classification (IPC) or to both national classification and IPC

### B. FIELDS SEARCHED

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

CNTXT, VEN, VCN: 寄生, 折叠, 耦合, 调谐, 馈电, 长度, fold+, parasitic, radiator, couple, leghth, tun+, feeding point

### C. DOCUMENTS CONSIDERED TO BE RELEVANT

| Category* | Citation of document, with indication, where appropriate, of the relevant passages | Relevant to claim No. |
| --- | --- | --- |
| X | CN 215911582 U (HUAWEI TECHNOLOGIES CO., LTD.) 25 February 2022 (2022-02-25) description, paragraphs 31-63, and figures 5-8 | 1-11 |
| X | CN 113991282 A (GUANGDONG OPPO MOBILE COMMUNICATIONS CO., LTD.) 28 January 2022 (2022-01-28) description, paragraphs 36-52 | 1-11 |
| PX | CN 116315584 A (HUAWEI TECHNOLOGIES CO., LTD.) 23 June 2023 (2023-06-23) entire description | 1-11 |
| A | CN 115579618 A (GUANGDONG OPPO MOBILE COMMUNICATIONS CO., LTD.) 06 January 2023 (2023-01-06) entire description | 1-11 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 February 2024** | **23 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

36

<div align="center">

**INTERNATIONAL SEARCH REPORT**
**Information on patent family members**

</div>

| International application No. |
|---|
| **PCT/CN2023/135497** |

| Patent document cited in search report | | | Publication date (day/month/year) | Patent family member(s) | Publication date (day/month/year) |
|---|---|---|---|---|---|
| CN | 215911582 | U | 25 February 2022 | None | |
| CN | 113991282 | A | 28 January 2022 | None | |
| CN | 116315584 | A | 23 June 2023 | None | |
| CN | 115579618 | A | 06 January 2023 | None | |

Form PCT/ISA/210 (patent family annex) (July 2022)

**REFERENCES CITED IN THE DESCRIPTION**

**Patent documents cited in the description**

- CN 202310125196